# EUROPÄISCHE PATENTSCHRIFT

(11) **EP 1 673 260 B1**
(45) Veröffentlichungstag und Bekanntmachung des Hinweises auf die Patenterteilung: **20.01.2010**
(21) Anmeldenummer: 04789942.2
(22) Anmeldetag: 07.10.2004
(51) Int. Cl.: B60R 1/06, B60S 1/52

(54) **REINIGUNGSVORRICHTUNG**
CLEANING DEVICE
DISPOSITIF DE NETTOYAGE

(30) Priorität: 14.10.2003 DE 10348885
(43) Veröffentlichungstag der Anmeldung: 28.06.2006
(73) Patentinhaber: SMR Patents S.à.r.l., 1653 Luxembourg (LU)
(72) Erfinder: WALDMANN, Bernd, 72622 Nürtingen (DE); WELLER, Klaus, 74061 Ebersbach (DE); LEONBERGER, Karl-Heinz, 73269 Hochdorf (DE)
(74) Vertreter: Rausch, Gabriele
(86) Internationale Anmeldenummer: PCT/DE2004/002233
(87) Internationale Veröffentlichungsnummer: WO 2005/039932

(56) Entgegenhaltungen:
- PATENT ABSTRACTS OF JAPAN Bd. 016, Nr. 115 (M-1224), 23. März 1992 (1992-03-23) & JP 03 284450 A (TOKAI RIKA CO LTD), 16. Dezember 1991 (1991-12-16)
- PATENT ABSTRACTS OF JAPAN Bd. 005, Nr. 029 (M-056), 21. Februar 1981 (1981-02-21) & JP 55 156740 A (NAGANO MASUKAZU; others: 01), 6. Dezember 1980 (1980-12-06)

## Beschreibung

Die Erfindung betrifft eine Reinigungsvorrichtung nach dem Oberbegriff des Anspruches 1.

Beim Einsatz von ultrahydrophoben Beschichtungen perlt das Wasser selbstständig ab und nimmt dabei Schmutzpartikel mit. Kommen jedoch nur feuchte Schmutzpartikel auf die beschichtete Oberfläche, kann es trotz ultrahydrophoben Beschichtungen vorkommen, dass die Schmutzpartikel dann nicht abperlen, sondern haften bleiben. So werden solche ultrahydrophoben Beschichtungen für Spiegelgläser von Kraftfahrzeug-Außenrückblickspiegeln, für Scheinwerfer, für Heckleuchten oder für Kameralinsen oder für deren Abdeckungen oder für Frontscheiben oder für Heckleuchten oder für Zusatzbremsleuchten verwendet. Für diese Kraftfahrzeugteile kann dann keine ausreichende Reinigungswirkung erzielt werden. Diese Nachteile treten nicht nur bei hydrophoben Beschichtungen auf, sondern auch bei herkömmlichen Flächen.

Bei einer bekannten Reinigungsvorrichtung (Patent Abstracts of Japan, Publication Number: 03284450, Publication Date: 16.12.91; Application Date: 31.03.90, Application Number: 02085454;
Applicant: TOKAI RICA CO LTD; Inventor: Harada Shoichi; Int.Cl.: B60S 1/60 B60 R 1/06; Title: Air spraying type water droplet removing device of outer mirror for automobile) befinden sich am Rand eines Spiegelglasrahmens Vertiefungen, in die eine Düse eingesetzt ist. Sie erstreckt sich geradlinig entlang einer Achse. Dadurch tritt das Reinigungsmedium aus der Düse nur über einen verhältnismäßig kleinen Winkel aus. Die Reinigungswirkung ist dadurch beeinträchtigt.

Die Erfindung liegt die Aufgabe zugrunde, die gattungsgemäße Reinigungsvorrichtung so auszubilden, dass eine zuverlässige Reinigung gewährleistet ist.

Diese Aufgabe wird bei der gattungsgemäßen Reinigungsvorrichtung erfindungsgemäß mit den kennzeichnenden Merkmalen des Anspruches 1 gelöst.

Aufgrund der erfindungsgemäßen Ausbildung tritt das Reinigungsmedium als Flüssigkeitsschirm aus, der die zu reinigende Fläche bereits beim Austritt aus der Austrittsöffnung flächig beaufschlagt. Die Austrittsöffnung kann sehr schmal sein, so dass das Reinigungsmedium mit hoher Geschwindigkeit auf die zu reinigende Fläche trifft und auch hartnäckig festsetzenden Schmutz zuverlässig entfernt. Der Kanal sorgt dafür, dass das Reinigungsmedium gleichmäßig der Austrittsöffnung zugeführt wird. Der austretende Flüssigkeitsschirm schiebt die auf der zu reinigenden Fläche befindlichen Schmutzpartikel weg, wodurch auch fest anhaftende Partikel zuverlässig entfernt werden. Da sich die Düse über mindestens einen Winkelbereich von etwa 90° erstreckt, wird ein sehr breiter, die gesamte zu reinigende Fläche erfassender Flüssigkeitsschirm erzeugt.

Vorteilhaft begrenzt ein Teil der zu reinigenden Fläche den Kanal. Dadurch lässt sich die Fläche optimal bis an den Rand reinigen. Vorzugsweise ist die Reinigungsvorrichtung mit dem vorhandenen Waschsystem des Kraftfahrzeuges verbunden. Die Reinigungsvorrichtung ist konstruktiv einfach und kostengünstig ausgebildet.

Weitere Merkmale der Erfindung ergeben sich aus den weiteren Ansprüchen, der Beschreibung und den Zeichnungen.

Die Erfindung wird nachstehend anhand zweier in den Zeichnungen dargestellter Ausführungsbeispiele näher beschrieben. Es zeigt
- Fig. 1: eine Vorderansicht eines Teiles eines Außenrückblickspiegels eines Kraftfahrzeuges mit einer erfindungsgemäßen Reinigungsvorrich- tung,
- Fig. 2: eine Darstellung entsprechend Fig. 1 mit einer zweiten Ausfüh- rungsform einer erfindungsgemäßen Reinigungsvorrichtung,
- Fig. 3: einen Schnitt längs der Linie III-III in Fig. 1,
- Fig. 4: die Einzelheit IV in Fig. 3 in vergrößerter Darstellung,
- Fig. 5: eine Stirnansicht gemäß Pfeil V in Fig. 1,
- Fig. 6: eine weitere erfindungsgemäße Vorrichtung in einer Dar- stellung entsprechend Fig. 4.

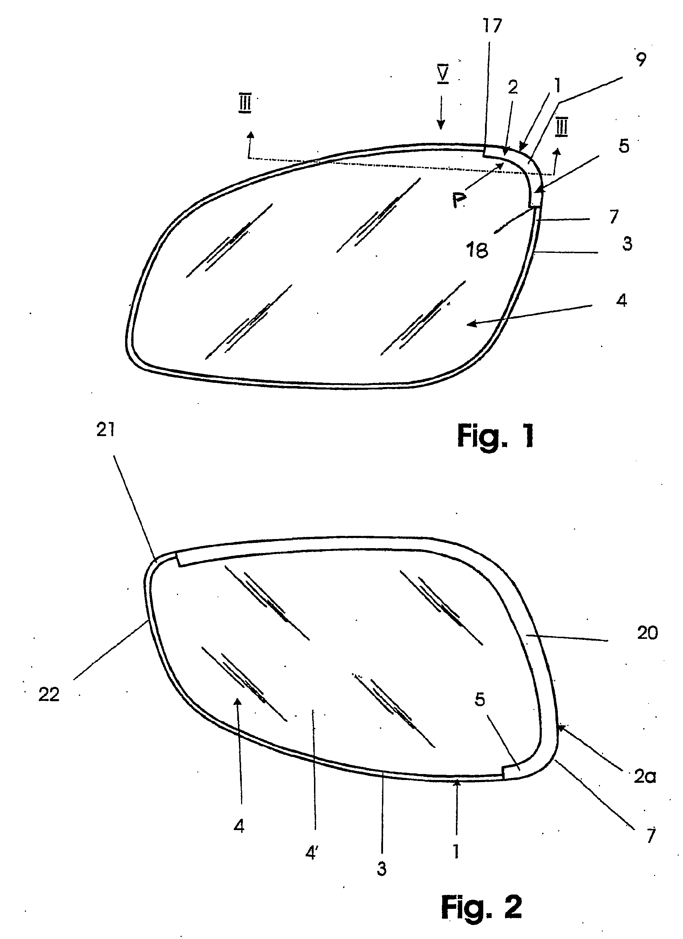

Fig. 1 zeigt einen Teil eines Außenrückblickspiegel 1 mit einer Reinigungsvorrichtung 2, die in einem Eckbereich eines Spiegelglasträgers 3 vorgesehen ist. Er trägt in bekannter Weise ein Spiegelglas 4, das eine hydrophobe Beschichtung aufweist. Der Spiegelglasträger 3 ist in einem (nicht dargestellten) Spiegelgehäuse untergebracht, das mit einem Spiegelfuß am Fahrzeug befestigt ist. Das Spiegelgehäuse ist gegenüber dem Spiegelfuß in und entgegen Fahrtrichtung des Fahrzeuges schwenkbar. Für die beiden Schwenkrichtungen kann jeweils eine Schwenkachse (Zweiachsspiegel) oder auch nur eine Schwenkachse (Einachsspiegel) vorgesehen sein. Der Spiegelkopf ist vorteilhaft auch in eine Parkstellung verschwenkbar.

Im Spiegelkopf können Heizeinrichtungen zur Beheizung des Spiegelglases 4, einer noch zu beschreibenden Düse 5 der Reinigungsvorrichtung 2, wenigstens eine Umfeldleuchte, eine Wiederholblinkleuchte, wenigstens ein Lautsprecher, ein GPS-Modul, ein Antrieb für die motorische Verstellung des Spiegelglasträgers 3, eine Antenne, eine Kamera und dgl. untergebracht sein. Diese Einbauelemente können in beliebiger Kombination oder auch nur einzeln für sich vorgesehen sein, je nach Anforderung des Fahrzeugherstellers.

Im Spiegelfuß kann ebenfalls eine Umfeldleuchte, ein Lautsprecher und dgl. untergebracht sein. Auch diese Einbauelemente können einzeln für sich oder in beliebiger Kombination vorgesehen sein.

Die Reinigungsvorrichtung 2 weist eine Düse 5 sowie einen Anschluß 6 für ein Reinigungsmedium, vorzugsweise Wasser auf. Der Anschluß 6 ist über eine (nicht dargestellte) Leitung an einen Vorratsbehälter für das Reinigungsmedium angeschlossen. Der Vorratsbehälter kann der Behälter der Scheiben- und/oder der Scheinwerferwaschanlage des Fahrzeuges sein. Es kann aber auch ein eigener Vorratsbehälter vorgesehen sein, der an einer geeigneten Stelle im Fahrzeug eingebaut ist.

Das durch die Reinigungsvorrichtung 2 auf das zu reinigende Spiegelglas 4 aufzutragende Reinigungsmedium wird durch eine (nicht dargestellte) Pumpe oder durch ein ansteuerbares Mehrwegeventil aus dem Vorratsbehälter unter Druck dem Anschluß 6 zugeführt. Die Düse 5 und der Anschluß 6 können einstückig mit dem Spiegelglasträger 3 aus entsprechendem Kunststoff hergestellt sein. Der Anschluß 6 befindet sich hinter dem Spiegelglasträger 3, so daß die Leitung zur Zuführung des Reinigungsmediums verdeckt angeschlossen werden kann. Um einen sicheren Sitz der Leitung zu gewährleisten, ist das freie Ende 8 des Anschlusses 6 in Aufsteckrichtung der Leitung konisch erweitert ausgebildet.

Bei der Ausführungsform nach Fig. 1 befindet sich die Düse 5 der Reinigungsvorrichtung 2 im Eckbereich des Spiegelglases 4. Die Düse 5 erstreckt sich über einen Winkelbreich von etwa 90° und übergreift mit einer Wand 9 das Spiegelglas 4. Sie ist in Draufsicht gemäß Fig. 1 entsprechend dem Spiegelrand, an dem sie vorgesehen ist, gekrümmt. Die Wand 9 verläuft mit geringem Abstand parallel zur Oberseite 4' des Spiegelglases 4 und geht rechtwinklig in eine Seitenwand 10 über, die ihrerseits rechtwinklig an den Rand 11 des Spiegelglasträgers 3 anschließt. Die Seitenwand 10 liegt mit Abstand zum Rand 12 des Spiegelglases 4. Die Wände 9 und 10 der Reinigungsvorrichtung 2 erstrecken sich über einen Winkelbereich von etwa 90°.

Der freie Rand 13 der Wand 9 ist leicht in Richtung auf das Spiegelglas 4 gekrümmt und hat eine ebene Stirnseite 14, die parallel zur Oberseite 4' des Spiegelglases 4 liegt und zusammen mit ihr einen länglichen, über einen Winkelbereich von etwa 90° sich erstreckenden Kanal 23 bildet. Seine Tiefe ist um ein Mehrfaches größer als seine Höhe. Die stirnseitige Kanalöffnung bildet eine schmale, im wesentlichen rechteckige Düsenöffnung 15, durch die das Reinigungsmedium unter ausreichend hohem Druck aus der Düse 5 austritt. Da sich die Düsenöffnung 15 über einen Winkelbereich erstreckt, tritt das Reinigungsmedium nicht strahlförmig, sondern flächig als Flüssigkeitsschirm aus, wodurch die auf der Oberfläche 4' des Spiegelglases 4 vorhandenen Schmutzteilchen über die gesamte zu reinigende Fläche vom Reinigungsmedium beaufschlagt und von der Düse 5 aus nach außen zu den Spiegelrändern weggeschoben werden. Dadurch wird auf einfache Weise eine optimale Reinigung des Spiegelglases erreicht. Der Abstand zwischen der Stirnseite 14 und der Spiegelglasoberseite 4' ist um ein Mehrfaches kleiner als die Tiefe des Kanales 23, die aber wesentlich kleiner ist als die Länge des Düsenrandes 9 bzw. der Düsenöffnung 15. In Stirnansicht (Pfeil P in Fig. 1) hat der Kanal 23 rechteckigen Umriß und erstreckt sich vorteilhaft über die ganze Umfangsbreite der Düse 5.

Das über den Anschluß 6 zugeführte Reinigungsmedium gelangt zunächst in einen Verteilerraum 16, der nach außen durch die Wände 9, 10 der Düse 5 und nach innen durch die Ränder 11, 12 des Spiegelglases 4 und des Spiegelglasträgers 3 begrenzt wird. Wie sich aus Fig. 1 ergibt, wird der Verteilerraum 16 stirnseitig durch Stirnwände 17, 18 begrenzt, die einstückig mit den Wänden 9, 10 und dem Spiegelglasträger 3 ausgebildet sind und die Seitenränder des Kanales 23 bilden.

Da die Sichtseite 4' des Spiegelglases 4 den Kanal 23 und die Düsenöffnung 15 an einer Seite begrenzt, gelangt das Reinigungsmedium unmittelbar auf das Spiegelglas 4. Selbst der unterhalb der Wand 9 liegende Oberflächenteil des Spiegelglases 4 wird vom Reinigungsmedium einwandfrei erfaßt.

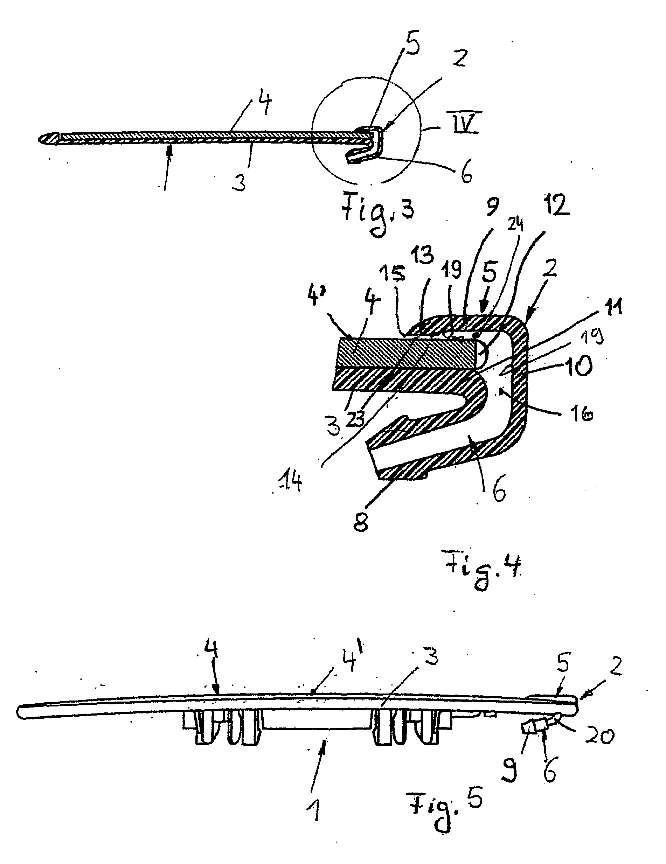

Im Anschluß an die Stirnseite 14 bzw. den Kanal 23 ist die Innenseite 19 des Verteilerraumes 16 nach außen abgesetzt, so daß eine Stufe und ein anschließender verbreiteter Raum 24 gebildet sind, der Teil des Verteilerraumes 16 ist. Der Raum 24 hat aber quer zur Strömungsrichtung des Reinigungsmediums kleinere Erstreckung als der übrige Verteilerraum 16 (Fig. 4). Dies trägt zur einwandfreien Reinigung bei, da aufgrund der Querschnittsverengung vor der Düsenöffnung 15 bzw. vor dem Kanal 23 die Strömungsgeschwindigkeit des Reinigungsmediums erhöht wird.

Die Reinigungsvorrichtung 2 kann grundsätzlich an jeder der Ecken des Spiegelglases 4 vorgesehen sein. Es ist auch möglich, an zwei, drei oder an allen vier Ecken des Spiegelglases 4 jeweils eine Reinigungsvorrichtung 2 anzuordnen.

Die Ausführungsform gemäß Fig. 2 unterscheidet sich vom vorigen Ausführungsbeispiel dadurch, daß sich die Reinigungsvorrichtung 2a über eine wesentlich größere Länge erstreckt. Sie verläuft vom Eckbereich 7 über den äußeren Seitenrand 20 und den oberen Längsrand 21 bis nahe an den inneren Seitenrand 22 des Spiegelglases 4. Zur Zuführung des Reinigungsmediums ist der Anschluß vorgesehen, der an geeigneter Stelle an der Reinigungsvorrichtung 2a angeordnet ist, die im übrigen gleich ausgebildet ist wie das vorige Ausführungsbeispiel .

Es ist möglich, eine solche lange Reinigungsvorrichtung 2, 2a in zwei oder mehr Kammern zu unterteilen, denen jeweils ein Anschluß zugeordnet ist. Das Reinigungsmedium tritt dann aus den Düsenöffnungen der Kammern jeweils flächig so aus, daß das Spiegelglas 4 über seine gesamte Fläche beaufschlagt und auf ihm befindliche Schmutzteilen mitgeschwemmt werden.

Die Reinigungsvorrichtung 2, 2a kann auch am (nicht dargestellten) Spiegelfuß des Außenrückblickspiegels vorgesehen sein. Sie ist so angeordnet, daß das Reinigungsmedium auf das Seitenfenster des Kraftfahrzeuges trifft. Die Düsenöffnung ist wiederum schlitzförmig ausgebildet, so daß das Reinigungsmedium als Flüssigkeitsschirm austritt.

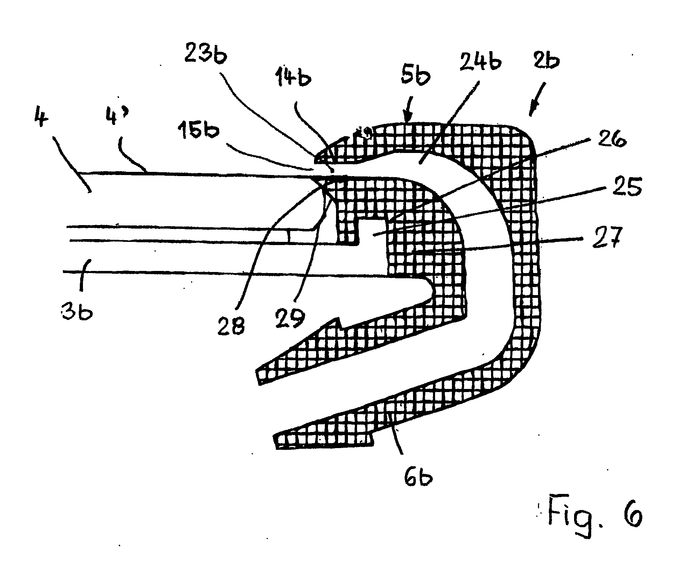

Wie Fig. 6 zeigt, kann die Reinigungsvorrichtung 2b auch eine separate Einheit bzw. ein Einbaumodul sein, die (das) am Einbauort befestigt wird, beispielsweise durch Kleben, Clipsen, Stecken oder dgl. In diesem Fall ist die Glasträgerplatte 3b mit einem abgewinkelten Rand 25 in einer Nut 26 der Vorrichtung 2b befestigt. Die Nut 26 liegt in einem relativ dickwandigen Übergangsabschnitt 27 zwischen der Düse 5b und dem Wasseranschluß 6b, der im wesentlichen gleich ausgebildet ist wie der gem. Fig. 1. Der Kanal 23b wird im Unterschied zu den beiden vorigen Ausführungsbeispielen von zwei ebenen, zueinander parallelen Stirnseiten 14b und 28 begrenzt, die Bestandteil der Düse 5b sind. Die Stirnseite 28 des Kanales 23b liegt in einer Ebene mit der Oberseite 4' des Spiegelglases 4. Sobald das Reinigungsmedium aus der schlitzförmigen Düsenöffnung 15b austritt, gelangt es auf die Spiegelglasoberseite 4'. Aufgrund der schlitzförmigen Ausbildung tritt die Reinigungsflüssigkeit wie bei den vorigen Ausführungsformen als dünner Flüssigkeitsschirm über die Länge der Düsenöffnung 15b aus.

Die Stirnseite 28 und die Spiegelglasoberseite 4' schließen unmittelbar aneinander an, so daß das Reinigungsmedium problemlos auf die Spiegelglasoberseite 4' gelangt. Um einen sauberen Anschluß der Stirnseite 28 der Düse 5b an die Spiegelglasoberseite 4' zu erreichen, schließt die Stirnseite spitzwinklig an eine Anschlußseite 29 der Düse 5b an.

Wie bei den vorigen Ausführungsformen schiebt der flächige Flüssigkeitsschirm die auf der Spiegelglasoberseite 4' befindlichen Schmutzteilchen weg, so daß auch fest anhaftende Partikel zuverlässig abgelöst werden.

An den Kanal 23b schließt der Raum 24b an, der größere Höhe hat als der Kanal 23b und gleich ausgebildet ist wie bei den vorigen Ausführungsbeispielen.

Die Düse 5b hat im übrigen gleiche Ausbildung wie die beschriebenen Düsen gemäß den Fig. 1 bis 5. Die Reinigungsvorrichtung 2b kann sich entsprechend Fig. 1 über einen Winkelbereich von beispielsweise etwa 90° erstrecken. Sie kann sich aber auch über einen längeren Randbereich des Spiegelglases 4 erstrecken, wie anhand von Fig. 2 beispielhaft beschrieben worden ist.

Die Reinigungsvorrichtung 2, 2a, 2b kann auch als integrierter oder separater Bestandteil von Scheinwerfern, Heckleuchten, Kameralinsen, Frontscheibe, Heckscheibe, Zusatzbremsleuchten von Fahrzeugen vorgesehen sein. Selbstverständlich können am Fahrzeug mehrere Reinigungsvorrichtungen vorgesehen sein, um unterschiedliche Fahrzeugteile reinigen zu können.

Die Pumpe oder das Mehrwegeventil kann manuell ein- und ausschaltbar sein. Es ist auch möglich, die Pumpe bzw. das Mehrwegeventil durch das Signal eines Sensors zu betätigen, der den Verschmutzungsgrad der zu reinigenden Fläche mißt und bei Überschreiten eines bestimmten Verschmutzungsgrades ein Schaltsignal abgibt. Auf diese Weise wird die Fläche automatisch gereinigt.

Die zu reinigenden Flächen können mit einer hydrophoben oder ultrahydrophoben Beschichtung versehen sein. Die Reinigungsvorrichtung 2, 2a, 2b kann aber auch für Flächen eingesetzt werden, die eine solche Beschichtung nicht haben.

## Patentansprüche

1. Reinigungsvorrichtung für außenseitig Flächen eines Kraftfahrzeuges, mit wenigstens einer Düse (5, 5b), die mit mindestens einem Zulauf (6, 6b) für ein Reinigungsmedium verbunden ist und wenigstens eine auf die zu reinigende Fläche gerichtete Austrittsöffnung (15, 15b) aufweist, die schlitzförmig ausgebildet und Teil eines Kanales (23, 23b) ist, der am Austrittsende der Düse (5, 5b) vorgesehen ist,
**dadurch gekennzeichnet, dass** sich die Düse (5, 5b) über mindestens einen Windelbereich von etwa 90° erstreckt.

2. Reinigungsvorrichtung nach Anspruch 1,
**dadurch gekennzeichnet, daß** die Austrittsöffnung (15) am Rand der zu reinigenden Fläche (4') vorgesehen ist.

3. Vorrichtung nach Anspruch 1 oder 2,
**dadurch gekennzeichnet, daß** ein Teil der zu reinigenden Fläche (4') den Kanal (23) begrenzt.

4. Vorrichtung nach Anspruch 1 oder 2,
**dadurch gekennzeichnet, daß** der Kanal (23b) von zwei Wandabschnitten (14b, 28) der Düse (5b) begrenzt ist.

5. Vorrichtung nach einem der Ansprüche 1 bis 4,
**dadurch gekennzeichnet, daß** die Tiefe des Kanales (23, 23b) größer ist als dessen Höhe.

6. Vorrichtung nach einem der Ansprüche 1 bis 5,
**dadurch gekennzeichnet, daß** die Tiefe des Kanales (23, 23b) um ein Mehrfaches größer ist als dessen Höhe.

7. Vorrichtung nach einem der Ansprüche 1 bis 6,
**dadurch gekennzeichnet, daß** der Kanal (23, 23b) konstanten Querschnitt hat.

8. Vorrichtung nach einem der Ansprüche 1 bis 7,
**dadurch gekennzeichnet, daß** der Kanal (23, 23b) in Stirnansicht etwa rechteckigen Umriß hat.

9. Vorrichtung, insbesondere nach einem der Ansprüche 1 bis 8,
**dadurch gekennzeichnet, daß** die Düse (5) einstückig mit einem die zu reinigende Fläche (4') tragenden Träger (3) ausgebildet ist.

10. Vorrichtung nach einem der Ansprüche 1 bis 8,
**dadurch gekennzeichnet, daß** die Düse (5b) am Spiegelglasträger (3b) befestigt ist, vorzugsweise durch Kleben, Clipsen, Stecken oder dergleichen.

11. Vorrichtung nach einem der Ansprüche 1 bis 10,
**dadurch gekennzeichnet, daß** der Zulauf (6, 6b) einstückig mit der Düse (5, 5b) ausgebildet ist.

12. Vorrichtung nach einem der Ansprüche 1 bis 11,
**dadurch gekennzeichnet, daß** die Düse (5, 5b) in einem Eckbereich (7) der zu reinigenden Fläche (4') angeordnet ist.

13. Vorrichtung nach einem der Ansprüche 1 bis 12,
**dadurch gekennzeichnet, daß** sich die Düse (5, 5b) über mindestens einen Randbereich (18) der zu reinigenden Fläche (4') erstreckt.

14. Vorrichtung nach einem der Ansprüche 4 bis 13,
**dadurch gekennzeichnet, daß** der eine Wandabschnitt (14, 14b) des Kanales (23, 23b) über eine Stufe in die Innenseite (19) der Düse (5, 5b) übergeht.

15. Vorrichtung nach einem der Ansprüche 1 bis 14,
**dadurch gekennzeichnet, daß** der Zulauf (6, 6b) hinter der zu reinigenden Fläche (4') liegt.

16. Vorrichtung nach einem der Ansprüche 1 bis 15,
**dadurch gekennzeichnet, daß** die zu reinigende Fläche (4') Teil eines Spiegelglases (4) eines Außenrückblickspiegels eines Kraftfahrzeuges ist.

17. Vorrichtung, insbesondere nach einem der Ansprüche 1 bis 16,
**dadurch gekennzeichnet, daß** sie ein Einbaumodul ist.

18. Vorrichtung nach einem der Ansprüche 1 bis 17,
**dadurch gekennzeichnet, daß** an den Kanal (23, 23b) ein Zuführraum (16) anschließt, in den die Zuleitung (6, 6b) mündet.

## Claims

1. A cleaning device for external surfaces of a motor vehicle, comprising at least one nozzle (5, 5b) connected to at least one feed (6, 6b) for cleaning fluid, and comprising at least one outlet opening (15, 15b) oriented towards the surface to be cleaned, which outlet opening is configured slot shaped and forms a portion of a channel (23, 23b), which is provided at the outlet end of the nozzle (5, 5b), wherein the nozzle (5, 5b) extends at least over an angular range of approximately 90°.

2. A cleaning device according to claim 1, wherein the outlet opening (15) is provided at the edge of the surface (4') to be cleaned.

3. A device according to claim 1 or 2, wherein a portion of the surface (4') to be cleaned defines the channel (23).

4. A device according to claim 1 or 2, wherein the channel (23b) is defined by two wall sections (14b, 28) of the nozzle (5b).

5. A device according to one of the claims 1 through 4, wherein the depth of the channel (23, 23b) is greater than its height.

6. A device according to one of the claims 1 through 5, wherein the depth of the channel (23, 23b) is multiple times greater than its height.

7. A device according to one of the claims 1 through 6, wherein the channel (23, 23b) has a constant cross section.

8. A device according to one of the claims 1 through 7, wherein the channel (23, 23b) has an approximately rectangular outline in face view.

9. A device in particular according to one of the claims 1 through 8, wherein the nozzle (5) is integrally configured with a support (3) supporting the surface (4') to be cleaned.

10. A device according to one of the claims 1 through 8, wherein the nozzle (5b) is mounted to the mirror glass carrier (3b), preferably through gluing, clipping, plugging or similar.

11. A device according to one of the claims 1 through 10, wherein the feed (6, 6b) is integrally configured with the nozzle (5, 5b).

12. A device according to one of the claims 1 through 11, wherein the nozzle (5, 5b) is disposed in a corner portion (7) of the surface (4') to be cleaned.

13. A device according to one of the claims 1 through 12, wherein the nozzle (5, 5b) extends at least over a rim portion (18) of the surface (4') to be cleaned.

14. A device according to one of the claims 4 through 13, wherein one wall portion (14, 14b) of the channel (23, 23b) transitions into the inside (19) of the nozzle (5, 5b) through a step.

15. A device according to one of the claims 1 through 14, wherein the feed (6, 6b) is disposed behind the surface (4') to be cleaned.

16. A device according to one of the claims 1 through 15, wherein the surface (4') to be cleaned is part of a mirror glass (4) of an exterior rearview mirror of a motor vehicle.

17. A device in particular according to one of the claims 1 through 16, which is an installation module.

18. A device according to one of the claims 1 through 17, wherein a feed cavity (16) is connected to the channel (23, 23b), wherein the feed (6, 6b) opens into the feed cavity (16).

## Revendications

1. Dispositif de nettoyage pour des surfaces extérieures d'un véhicule automobile, comprenant au moins une buse (5, 5b) qui est reliée à au moins une amenée (6, 6b) pour un milieu de nettoyage et présente au moins une ouverture de sortie (15, 15b) orientée vers la surface à nettoyer qui est réalisée en forme de fente et fait partie d'un canal (23, 23b) qui est prévu à l'extrémité de sortie de la buse (5, 5b),
**caractérisé en ce que** la buse (5, 5b) s'étend sur au moins une plage angulaire d'environ 90°.

2. Dispositif de nettoyage selon la revendication 1,
**caractérisé en ce que** l'ouverture de sortie (15) est prévue au bord de la surface à nettoyer (4').

3. Dispositif selon la revendication 1 ou 2,
**caractérisé en ce qu'**une partie de la surface à nettoyer (4') limite le canal (23).

4. Dispositif selon la revendication 1 ou 2,
**caractérisé en ce que** le canal (23b) est limité par deux sections de paroi (14b, 28) de la buse (5b).

5. Dispositif selon l'une quelconque des revendications 1 à 4,
**caractérisé en ce que** la profondeur du canal (23, 23b) est supérieure à sa hauteur.

6. Dispositif selon l'une quelconque des revendications 1 à 5,
**caractérisé en ce que** la profondeur du canal (23, 23b) est supérieure d'un multiple à sa hauteur.

7. Dispositif selon l'une quelconque des revendications 1 à 6,
**caractérisé en ce que** le canal (23, 23b) possède une section transversale constante.

8. Dispositif selon l'une quelconque des revendications 1 à 7,
**caractérisé en ce que** le canal (23, 23b) possède un pourtour approximativement rectangulaire en vue frontale.

9. Dispositif, notamment selon l'une quelconque des revendications 1 à 8,
**caractérisé en ce que** la buse (5) est réalisée d'une pièce avec un support (3) portant la surface à nettoyer (4').

10. Dispositif selon l'une quelconque des revendications 1 à 8,
**caractérisé en ce que** la buse (5b) est fixée au support de glace de vitrage (3b), de préférence par collage, enclipsage, enfichage ou similaire.

11. Dispositif selon l'une quelconque des revendications 1 à 10,
**caractérisé en ce que** l'amenée (6, 6b) est réalisée d'une pièce avec la buse (5, 5b).

12. Dispositif selon l'une quelconque des revendications 1 à 11,
**caractérisé en ce que** la buse (5, 5b) est disposée dans une région de coin (7) de la surface à nettoyer (4').

13. Dispositif selon l'une quelconque des revendications 1 à 12,
**caractérisé en ce que** la buse (5, 5b) s'étend sur au moins une région de bord (18) de la surface à nettoyer (4').

14. Dispositif selon l'une quelconque des revendications 4 à 13,
**caractérisé en ce qu'**une section de paroi (14, 14b) du canal (23, 23b) passe par le biais d'un seuil dans le côté interne (19) de la buse (5, 5b).

15. Dispositif selon l'une quelconque des revendications 1 à 14,
**caractérisé en ce que** l'amenée (6, 6b) se situe derrière la surface à nettoyer (4').

16. Dispositif selon l'une quelconque des revendications 1 à 15,
**caractérisé en ce que** la surface à nettoyer (4') fait partie d'une glace de vitrage (4) d'un rétroviseur arrière d'un véhicule automobile.

17. Dispositif, notamment selon l'une quelconque des revendications 1 à 16,
**caractérisé en ce qu'**il est un module à encastrer.

18. Dispositif selon l'une quelconque des revendications 1 à 17,
**caractérisé en ce qu'**un espace d'alimentation (16) dans lequel l'amenée (6, 6b) débouche se raccorde au canal (23, 23b).
